# Europäisches Patentamt
## European Patent Office
### Office européen des brevets

(19)

(11) Veröffentlichungsnummer: **0 064 988**
**B1**

(12) **EUROPÄISCHE PATENTSCHRIFT**

(45) Veröffentlichungstag der Patentschrift:
**02.05.85**

(21) Anmeldenummer: **81903013.1**

(22) Anmeldetag: **07.11.81**

(86) Internationale Anmeldenummer:
**PCT/DE 81/00194**

(87) Internationale Veröffentlichungsnummer:
**WO 82/01678 (27.05.82** Gazette 82/14)

(51) Int. Cl.⁴: **B 23 B 5/04**

(54) **VORRICHTUNG ZUM BEARBEITEN VON BREMSSCHEIBEN.**

(30) Priorität: **13.11.80 DE 8030325 U**

(43) Veröffentlichungstag der Anmeldung:
**24.11.82 Patentblatt 82/47**

(45) Bekanntmachung des Hinweises auf die Patenterteilung:
**02.05.85 Patentblatt 85/18**

(84) Benannte Vertragsstaaten:
**DE FR GB**

(56) Entgegenhaltungen:
**DE - A - 2 540 187**
**DE - A - 2 804 840**
**DE - A - 2 945 111**
**US - A - 3 592 088**
**US - A - 4 226 146**

(73) Patentinhaber: **WÖSSNER, Hans, Aldinger Strasse 96, D-7000 Stuttgart 50 (DE)**

(72) Erfinder: **WÖSSNER, Hans, Aldinger Strasse 96, D-7000 Stuttgart 50 (DE)**

(74) Vertreter: **Patentanwälte Ruff und Beier, Neckarstrasse 50, D-7000 Stuttgart 1 (DE)**

## Beschreibung

Die Erfindung betrifft eine Vorrichtung zur Bearbeitung gebrauchter Bremsscheiben von Fahrzeugen, insbesondere Kraftfahrzeugen, mit einer Kupplungs- und Zentriereinrichtung zum Anschluss der Vorrichtung an die am Fahrzeug befindliche Radnabe des Fahrzeuges und zur gleichzeitigen Übertragung eines durch einen Motor bewirkten Drehantriebes, sowie einen verfahrbaren Werkzeugträger für mindestens ein Bearbeitungswerkzeug.

Bei Fahrzeugbremsscheiben können während der Benutzung durch Verschleiss oder Fremdeinwirkung Oberflächenbeschädigungen, beispielsweise Riefen, auftreten, lange bevor die Scheibe völlig abgenutzt ist. Da insbesondere innenbelüftete Bremsscheiben einen erheblichen Wert haben, ist eine Nacharbeitung wirtschaftlich einem Austausch vorzuziehen, wenn der Aufwand für die Nacharbeitung gering gehalten werden kann. Neben der bekannten Nacharbeitung von Bremsscheiben in Kraftfahrzeugwerkstätten auf Bearbeitungsmaschinen, bei denen die Bremsscheiben also ausgebaut werden mussten, ist es bereits bekannt geworden, die Bremsscheiben in eingebautem Zustand am Fahrzeug nachzuarbeiten.

Bei einer derartigen bekannten Vorrichtung (DE-A1-2 804 840) muss die gesamte Vorrichtung von Hand hochgehoben und an die Radnabe gehalten werden, bevor sie festgeschraubt werden kann. Eine echte Zentrierung erfolgt dann erst, wenn alle Schrauben festgezogen sind. Dabei müssen, um eine wirkliche Zentrierung durchzuführen, hierzu spezielle Vorkehrungen getroffen sein. Diese Vorrichtung lässt sich nicht nur sehr schwer montieren, sie besitzt darüber hinaus einen weiteren Nachteil. Während des Laufens des Fremdantriebes wird zwar ein Mitdrehen durch einen seitlichen Stützfuss verhindert, jedoch hängt das gesamte Gewicht der Vorrichtung an der Radnabe. Dadurch ist die bekannte Vorrichtung sowohl in ihrer Handhabung als auch in der Genauigkeit der erzielten Arbeitsergebnisse ungünstig.

Bei einer weiteren bekannten Vorrichtung (US-A-4 226 146, Fig. 1) findet zwar ein Fremdantrieb der Bremsscheibe statt, so dass eine Bearbeitung am Fahrzeug durchgeführt werden kann. Jedoch erfolgt keine Zentrierung oder Ausrichtung der Bearbeitungsvorrichtung, da diese mit Hilfe eines Befestigungsarmes am Fahrzeugkörper in den zum Befestigen der Bremse vorhandenen Bohrungen erfolgt. Bei dieser bekannten Vorrichtung muss also zum einen die Bremse abgenommen werden, zum anderen ist aufgrund der fehlenden Zentrierung gegenüber der Drehachse die Bearbeitungsgenauigkeit nur gering.

Bei einer weiteren bekannten Vorrichtung (US-A-4 226 146, Fig. 2) ist zwar eine Befestigung der Arbeitsvorrichtung an den Drehantrieb vorgesehen, jedoch wird die dadurch möglicherweise herbeigeführte Zentrierung gegenüber der Drehachse durch die zusätzliche Befestigung mit Hilfe eines Armes an den zur Anbringung der Bremsen vorhandenen Bohrungen wieder beseitigt. Bei dieser Vorrichtung ist ebenfalls die Entfernung der Bremsen erforderlich, und die Arbeitsgenauigkeit ist nur gering.

Ebenfalls bekannt ist ein Verfahren und eine Vorrichtung zum Abdrehen von Bremsscheiben (DE-A1-2 745 111), bei dem die Bremsklötze entfernt und an deren Stelle Werkzeughalter mit einer Schnittleiste in den Bremssattel eingesetzt werden. Mit Hilfe eines Drehantriebes wird die Bremsscheibe angetrieben, während die Werkzeughalter durch Betätigen der Bremszylinder gegen die Scheibe gedrückt werden. Dies bedeutet natürlich einen beachtlichen Zeitaufwand, darüber hinaus können die Bremsscheiben nicht exakt abgedreht werden, da keine Verstellmöglichkeit der Bearbeitungswerkzeuge radial zur Bremsscheibe gegeben ist.

Der Erfindung liegt die Aufgabe zugrunde, eine Vorrichtung der eingangs genannten Art zu schaffen, die es möglich macht, gebrauchte Bremsscheiben am Fahrzeug mit möglichst geringem Zeit- und Kostenaufwand und verbessertem Ergebnis nachzuarbeiten.

Zur Lösung dieser Aufgabe schlägt die Erfindung eine Vorrichtung der eingangs genannten Art vor, bei der die die Kupplungs- und Zentriereinrichtung, den Werkzeugträger und den Antrieb enthaltende Bearbeitungsvorrichtung auf einem Fahrgestell in Höhe und Neigung verstellbar angebracht ist, wobei die Neigung um eine quer zur Antriebswelle verlaufende Schwenkachse und vorzugsweise um eine parallel zur Antriebswelle verlaufende Schwenkachse schwenkbar ist. Es ist zum Betrieb der von der Erfindung vorgeschlagenen Vorrichtung nur erforderlich, bei aufgebocktem Fahrzeug das Laufrad sowie ggf. den Bremssattel mit den Bremsbelägen abzunehmen, die Vorrichtung mittels des Fahrgestelles in Höhe und Neigung auszurichten, anzukuppeln und in Gang zu setzen. Die Bremsscheibe wird in eingebautem Zustand nachgearbeitet, wodurch der Zeit- und Kostenaufwand für den Ausbau der Bremsscheibe eingespart wird. Das Anheben und Befestigen der Vorrichtung ist wesentlich erleichtert. Jede Fehlermöglichkeit im genauen Rundlauf der nachbearbeiteten Bremsscheibe ist ausgeschlossen. Die Vorrichtung kann nacheinander an alle Laufräder eines Fahrzeuges herangeführt werden.

Die Neigung ist einerseits auf die Achsneigung des Fahrzeuges gegenüber der Horizontalen, also um eine quer zur Antriebsachse verlaufende Schwenkachse, und vorzugsweise auch um eine parallel zur Antriebsachse verlaufende Schwenkachse einstellbar, damit die Werkzeuge in eine gewünschte radiale Position der Bremsscheibe gebracht werden können, wenn z.B. die Bremsscheibe nur in einer bestimmten Position durch einen Ausschnitt in einem Abdeckblech frei zugänglich ist. Der einzig frei zugängliche Bereich befindet sich normalerweise vor der Achse in deren Höhe oder unter einem gewissen Neigungswinkel dazu. Um ein Umspannen der Werkzeuge bei der Bearbeitung der Bremsscheiben auf den unterschiedlichen Seiten des Fahrzeuges zu vermeiden, enthält vorzugsweise der Drehantrieb zwei einander entgegengesetzt gerichtete Kupplungs- und Zentrierungseinrichtungen bzw. Anschlüsse dafür, die vorzugsweise gleichsinnig angetrieben und an zwei Enden einer Antriebswelle angeordnet sind. Dabei wird dann der Werkzeugträger zwischen zwei jeweils zu einer der Kupplungs- und Zentrierungseinrichtungen gehörenden Arbeitspositionen bewegt, so dass der Werkzeugträger nicht doppelt vorhanden sein muss.

Es ist besonders bevorzugt, dass die Kupplungs- und Zentriereinrichtung aus einer Nabe mit Schraubanschlussmöglichkeiten für unterschiedliche Radnaben besteht.

Ein besonders bevorzugter Grundaufbau besteht darin, dass die Vorrichtung ein langgestrecktes Basisteil, eine etwa mittig darauf angeordnete Lagerung einer Antriebsachse mit beidseitigen Anschlüssen für die Kupplungs- und Zentrierungseinrichtung enthält und dass in Längsrichtung des Basisteiles eine Führung für den Werkzeugträger einseitig an der Lagerung vorbei verläuft.

Der Planantrieb kann vorzugsweise zur Bearbeitung der Bremsscheibe gegenüber dieser radial nach aussen elektromotorisch betätigbar sein. Dadurch wird vermieden, dass einerseits durch Handbetätigung bei ungeübtem Bedienungspersonal Oberflächen-Ungleichmässigkeiten entstehen oder die Werkzeuge bis in die Radnabe hinein gefahren, was bei einer Betätigung von aussen nach innen möglich wäre.

Es sind am Werkzeugträger vorzugsweise zwei Werkzeughalter für zwei Werkzeuge vorgesehen, die je einen eigenen Zustellantrieb und vorzugsweise einen gemeinsamen, die Werkzeuge quer zur Achsrichtung der Bremsscheibe verfahrenden Planantrieb aufweisen. Dadurch wird einerseits die Einstellung der beiden Werkzeuge an die Bremsscheibe heran erleichtert und andererseits bei der Bearbeitung absolute Planparallelität in einem Arbeitsgang sichergestellt. Als Werkzeuge dienen normalerweise Drehmeissel. Es können hier aber auch Schleifscheiben oder andere schleifende oder schneidende Vorrichtungen eingesetzt werden.

Die Erfindung ermöglicht es also, die Bremsscheiben an Ort und Stelle nachzudrehen. Da der Fall, dass eine Bremsscheibe völlig unbrauchbar wird und nicht nachbearbeitet werden kann, sehr selten ist, kann dadurch ggf. eine teure Ersatzteillagerung vermieden werden und es ist auch möglich, derartige Arbeiten in Werkstätten für unterschiedliche Kraftfahrzeugfabrikate durchführen zu lassen.

Die Erfindung ist im folgenden anhand eines Ausführungsbeispiel dargestellt und wird im folgenden näher beschrieben.

In der Zeichnung zeigen:

Fig. 1 eine Seitenansicht der Vorrichtung,

Fig. 2 ein teilgeschnittenes, gegenüber Fig. 1 vergrössertes Detail,

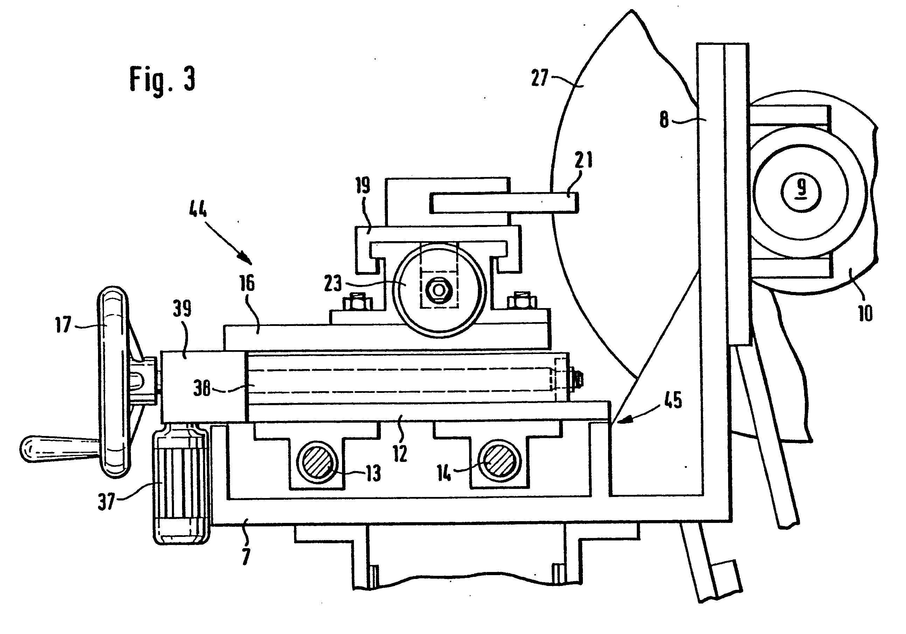

Fig. 3 eine Teilansicht in Richtung des Pfeiles III in Fig. 2.

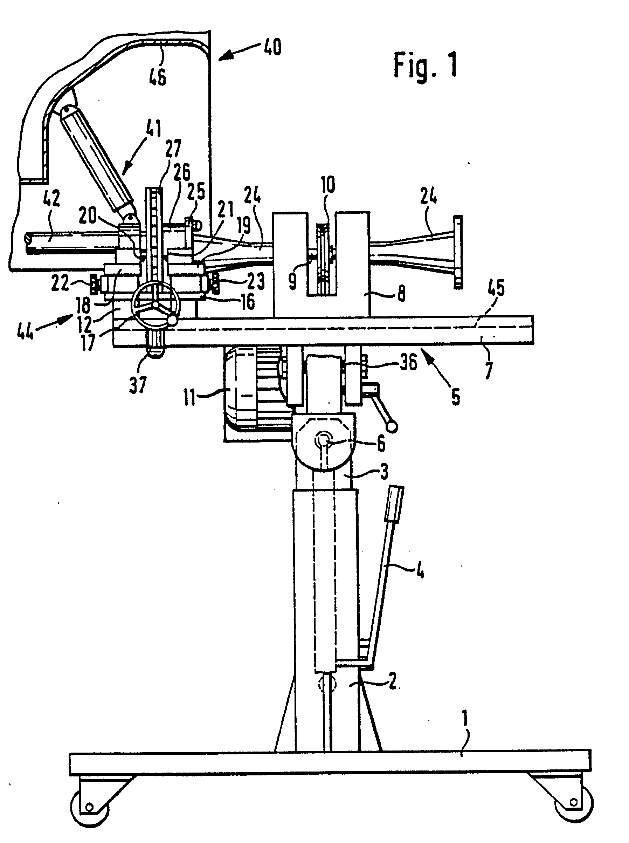

An einem Fahrgestell 1 mit Rädern ist eine vertikale Säule 2 befestigt, in der ein Träger 3 vertikal verschiebbar geführt ist, der mittels einer durch einen Hebel 4 betätigbaren, innerhalb der Säule 2 untergebrachten Druckvorrichtung in seiner Höhenlage verstellbar ist. Eine Bearbeitungsvorrichtung 5 ist um eine horizontale Achse 6 und um eine weitere, quer dazu verlaufende Achse 36 am oberen Ende des Trägers 3 schwenkbar und feststellbar befestigt. Die Bearbeitungsvorrichtung umfasst als Basisteil einen Längsträger 7, in dessen Mitte eine Lagerung 8 nach Art eines Spindelstockes befestigt ist, in der eine Antriebsachse 9 nach Art einer Drehbankspindel drehbar gelagert ist. Die Antriebsachse 9 ist innerhalb der Lagerung 8 mit einer Keilriemenscheibe 10 versehen, die über Keilriemen von einem unterhalb des Längsträgers 7 angebrachten Elektromotor 11 drehbar angetrieben ist. An dem Längsträger 7 ist ein Werkzeugträger 44 auf einer Führung 45 geführt, der einen Schlitten 12 enthält, der mittels zweier Gewindespindeln 13, 14 in Längsrichtung des Trägers 7 verschiebbar und ggf. feststellbar ist. An dem Schlitten 12 ist ein Querschlitten 16 mittels einer an dem Schlitten 12 gelagerten Spindel 38 quer zur Längsrichtung des Längsträgers 7 (quer zur Zeichenebene der Fig. 1) verschiebbar. Die Spindel 38 ist manuell durch ein Handrad 17 und automatisch durch einen elektrischen Stellmotor 37 über ein Getriebe 39 antreibbar. Der Querschlitten 16 trägt auf einer Führung zwei Werkzeughalter 18, 19, an denen Werkzeuge 20, 21 festspannbar sind. Die Werkzeughalter 18, 19 sind mittels Drehknöpfen 22, 23 parallel zur Antriebsachse 9 verstellbar.

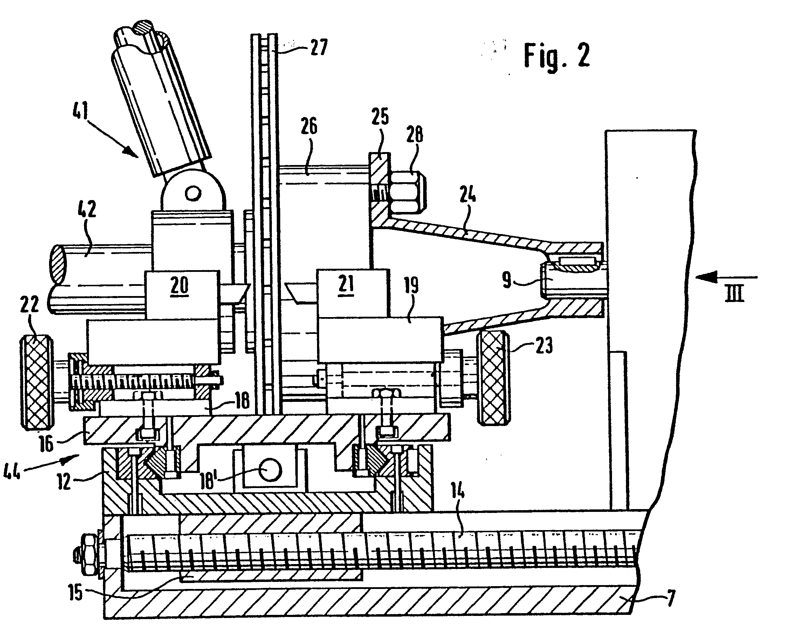

An den Enden der Antriebsachse 9 sind Kupplungs- und Zentriereinrichtungen 24 in Form von Naben drehfest angebracht, die an ihrem der Antriebsachse 9 abgewandten Ende mit je einem Flansch 25 versehen sind, der mit einer Radnabe 26 bzw. anderen drehbaren Teilen einer Fahrzeugachse 42 eines Kraftfahrzeuges 40 verbunden ist, von dem in Fig. 2 nur Teile einer Radaufhängung 41 und in Fig. 1 zusätzlich einige Karosserieteile 46 gezeigt sind. Zur Ankupplung dienen die Schraubbolzen bzw. Radmuttern 28, mit denen normalerweise die Felge des Kraftfahrzeugrades an der Radnabe 26 befestigt ist. Die mit der Fahrzeugachse 42 verbundene Radnabe 26 trägt die zu bearbeitende Bremsscheibe 27.

Das in Fig. 1 dargestellte Gerät wird zu einem auf einer Hebebühne aufgebockten Fahrzeug 40 gefahren, an dessen Achse 42 sich die zu bearbeitende Bremsscheibe 27 befindet. Das zugehörige Rad ist abgenommen und vorzugsweise auch der Bremssattel abgebaut worden. Mittels der Hubvorrichtung und der Verstellbarkeit um die Achse 6 wird die Antriebsachse 9 auf die Richtung der Fahrzeugachse 42 eingestellt. Falls erforderlich, wird der Werkzeugträger 44 durch eine Schwenkung um die Achse 36 in eine Position gebracht, in der er unbehindert von Karosserieteilen, Abdeckblechen usw. arbeiten kann. Die Vorrichtung wird dann an die Radnabe angekuppelt, indem die Nabe 24 der Antriebsachse über ihren Flansch 25 an die Radnabe 26 angeschraubt wird. Dabei wird gleichzeitig eine Ankupplung des Drehantriebes und eine Zentrierung der Bearbeitungsvorrichtung 5 zur Fahrzeugachse, und damit zur Bremsscheibe 27 vorgenommen.

Danach wird der Schlitten 12 in die in Fig. 1 dargestellte Position verfahren, in der er sich etwa in der Mittellage relativ zur Mittelebene der Bremsscheibe 27 befindet und in dieser Lage fixiert. Mit dem Handrad 17 wird der Querschlitten 16 so verfahren, dass die Werkzeuge 20, 21 am radial inneren Ende der zu bearbeitenden Ringfläche der Bremsscheibe 27 stehen. Anschliessend werden die beiden Werkzeuge 20, 21, beispielsweise Drehstähle oder auch rotierend oder schwingend angetriebene Schleifkörper, mittels der Drehknöpfe 22, 23 in Richtung der Antriebsachse verfahren, bis sie die gewünschte Zustellung zur Bearbeitung der Bremsscheibe 27 haben. Nun werden die Motoren 11 und 37 eingeschaltet und dadurch die Bremsscheibe 27 in Rotation versetzt und die Werkzeuge 20, 21 gemeinsam durch Verschieben des Querschlittens 16 radial nach aussen bewegt, bis der Dreh-Bearbeitungsvorgang abgeschlossen ist und die Werkzeuge nach aussen aus der Ringfläche herauslaufen. Danach werden die Motoren 11, 37 abgestellt und die Verbindung zwischen dem Flansch 25 und der Radnabe 26 gelöst. Zum Bearbeiten eines gegenüberliegenden Rades wird der Werkzeugträger durch Verschiebung des Schlittens 12 längs der Führung 15 an das andere Ende des Längsträgers 7 gefahren. Zum Anschluss der gegenüberliegenden Nabe an die Radachse wird die Neigung entsprechend eingestellt und dann die Ankupplung vorgenommen. Normalerweise ist auf beiden Seiten der Lagerung 8 eine Nabe 24 vorgesehen, sie könnte jedoch auch umgebaut werden, falls es sich beispielsweise um eine Sondernabe für eine seltene Felgenbefestigung handelt.

Die Erfindung ist nicht auf das dargestellte und beschriebene Ausführungsbeispiel beschränkt. Es sind vielmehr viele Abweichungen möglich, ohne den Rahmen der Erfindung zu verlassen. So hat beispielsweise der Flansch 25 mehrere Kränze von Bohrungen, so dass er für alle gängigen Radnaben-Typen verwendbar ist. Statt der mit den Radmuttern oder -schrauben an der Radnabe 26 zu befestigenden Nabe 24 kann auch eine andere Zentrier- und Kupplungseinrichtung, beispielsweise eine mit Greifern arbeitende Spannvorrichtung, verwendet werden. Das Fahrgestell ist hauptsächlich zum Transport der Vorrichtung zum Montageort und zu ihrer Stützung während der Montage sowie ggf. zur Gewichtsentlastung bei der Bearbeitung vorgesehen. Während der Bearbeitung übernimmt jedoch die Radachse die Zentrierung und trägt das Gewicht der Vorrichtung zumindest teilweise. Insofern könnte vorteilhaft auch ein Fahrgestell verwendet werden, das beispielsweise durch eine Säule mit einem gewichtsausgleichenden Gasfederzylinder oder durch Ausgleichsgewichte und -seile eine kräftefreie Auf- und Abbewegung der Vorrichtung ermöglicht. Ferner könnte statt der Achsen 6, 36 ein frei schwenkbares Universalgelenk, beispielsweise ein Kugelgelenk und/oder statt des Fahrgestelles mit Säule eine andere, beispielsweise an der Hebebühne oder dem Fahrzeug selbst anzubringende Halterung verwendet werden.

**Patentansprüche**

1. Vorrichtung zur Bearbeitung gebrauchter Bremsscheiben (27) von Fahrzeugen (40), insbesondere Kraftfahrzeugen, mit einer Kupplungs- und Zentriereinrichtung (24) zum Anschluss der Vorrichtung (5) an die am Fahrzeug (40) befindliche Radnabe (26) des Fahrzeuges (40) und zur gleichzeitigen Übertragung eines durch einen Motor bewirkten Drehantriebes, sowie einem verfahrbaren Werkzeugträger (44) für mindestens ein Bearbeitungswerkzeug (20, 21), dadurch gekennzeichnet, dass die die Kupplungs-und Zentriereinrichtung (24), den Werkzeugträger (44) und den Antrieb enthaltende Bearbeitungsvorrichtung (5) auf einem Fahrgestell (1, 2) in Höhe und Neigung verstellbar angebracht ist, wobei die Neigung um eine quer zur Antriebswelle (9) verlaufende Schwenkachse (6) und vorzugsweise um eine parallel zur Antriebswelle (9) verlaufende Schwenkachse (36) schwenkbar ist.

2. Vorrichtung nach Anspruch 1, dadurch gekennzeichnet, dass zwei Werkzeughalter (18, 19) für je ein Werkzeug (20, 21) vorgesehen sind, die jeweils einen eigenen Zustellantrieb (22, 23) und vorzugsweise einen gemeinsamen, die Werkzeuge (20, 21) quer zur Achsrichtung der Bremsscheibe (27) verfahrenden Planantrieb (17, 37, 38) aufweisen.

3. Vorrichtung nach Anspruch 2, dadurch gekennzeichnet, dass der Planantrieb (17, 37, 38) zur Bearbeitung der Bremsscheibe (27) gegenüber dieser radial nach aussen elektromotorisch betätigbar ist.

4. Vorrichtung nach einem der Ansprüche 1 bis 3, dadurch gekennzeichnet, dass der Drehantrieb zwei einander entgegengesetzt gerichtete Kupplungs- und Zentriereinrichtungen (24) bzw. Anschlüsse dafür enthält, die vorzugsweise gleichsinnig angetrieben und an zwei Enden einer Antriebswelle (9) angeordnet sind.

5. Vorrichtung nach Anspruch 4, dadurch gekennzeichnet, dass der Werkzeugträger (44) zwischen zwei jeweils zu einer der Kupplungs- und Zentriereinrichtungen (24) gehörenden Arbeitspositionen bewegbar ist.

6. Vorrichtung nach einem der Ansprüche 1 bis 5, dadurch gekennzeichnet, dass die Kupplungs- und Zentriereinrichtung (24) aus einer Nabe mit Schraubanschlussmöglichkeiten für unterschiedliche Radnaben (26) besteht.

7. Vorrichtung nach einem der Ansprüche 4 bis 6, dadurch gekennzeichnet, dass ein langgestrecktes Basisteil (7) eine im Mittelbereich darauf angeordnete Lagerung (8) einer Antriebswelle (9) mit beidseitigen Anschlüssen für Kupplungs- und Zentriereinrichtungen (24) enthält und dass in Längsrichtung des Basisteiles (7) eine Führung (45) für den Werkzeugträger (44) angeordnet ist, die einseitig an der Lagerung (8) vorbei verläuft.

8. Vorrichtung nach Anspruch 7, dadurch gekennzeichnet, dass der Werkzeugträger (44) einen auf der Führung (45) verstellbar geführten Längsschlitten, einen darauf quer verschiebbar geführten und verstellbaren Querschlitten (16) und darauf wiederum in Querrichtung einzeln verstellbare Werkzeughalter (18, 19) aufweist.

**Claims**

1. Device for machining brake disks (27) of vehicles (40), particularly motor vehicles, with a coupling and centering means (24) for the connection of device (5) to the wheel hub (26) of the vehicle (40) and for simultaneously transferring a rotary drive provided by a motor, as well as a traversable tool support (44) for at least one machining tool (20, 21), characterized in that the machining device (5) containing the coupling and centering means (24), the tool support (44) and the drive is fitted to a chassis (1, 2) so as to be adjustable in height and slope, the slope being pivotable about a pivot pin (6) running at right angles to the drive shaft (9) and preferably about a pivot pin (36) running parallel to the drive shaft (9).

2. Device according to claim 1, characterized in that two tool holders (18, 19) are provided for in each case one tool (20, 21), and has in each case their own feed drive (22, 23) preferably a common planar drive (17, 37, 38) moving the tool (20, 21) at right angles to the axial direction of brake disk (27).

3. Device according to claim 2, characterized in that the planar drive (17, 37, 38) is electromotively operable in a radially outward manner with respect to brake disk (27) for machining the latter.

4. Device according to one of the claims 1 to 3, characterized in that the rotary drive contains two oppositely directed coupling and centering means (24) and/or connections for the same, which are preferably driven in the same direction and are arranged on two ends of a drive shaft (9).

5. Device according to claim 4, characterized in that the tool support (44) is movable between two working positions belonging in each case to one of the coupling and centering means (24).

6. Device according to one of the claims 1 to 5, characterized in that the coupling and centering means (24) comprises a hub with screw connection possibilities for different wheel hubs (26).

7. Device according to one of the claims 4 to 6, characterized in that an elongated base part (7) contains a bearing (8) for a drive shaft (9) arranged in the central area thereof with connections at both sides for coupling and centering means (24) and that a guide (45) for the tool support (44) is arranged in the longitudinal direction on base part (7), tool support (44) passing bearing (8) on one side.

8. Device according to claim 7, characterized in that the tool support (44) has a longitudinal slide adjustably guided on guide (45), an adjustable cross-slide (16) displacably guided at right angles thereon and transversely individually adjustable tool holders (18, 19) on cross-slide (16).

**Revendications**

1. Dispositif pour rénover des disques usés (27) de freins de véhicules (40), notamment de véhicules automobiles comportant un ensemble d'accouplement et centrage (24) pour raccorder le dispositif (5) au moyeu de roue (26) du véhicule présent sur le véhicule (40) et en même temps transmettre un couple d'entraînement engendré par un moteur, ainsi qu'un support d'outillage (44) déplaçable pour au moins un outil d'usinage ou rénovation (20, 21), caractérisé en ce que le dispositif de rénovation (5) comportant l'ensemble d'accouplement et de centrage (24), le support d'outillage (44) et le dispositif d'entraînement est monté sur un chariot (1, 2) réglable en hauteur et en inclinaison, l'inclinaison étant réglable autour d'un axe (6) perpendiculaire à l'arbre d'entraînement (9) et de préférence autour d'un axe (36) parallèle à l'arbre d'entraînement (9).

2. Dispositif selon la revendication 1, caractérisé en ce que deux supports d'outil (18, 19) portant chacun un outil (20, 21) sont prévus, supports qui comportent chacun un dispositif d'avance propre (22, 23) et de préférence ensemble un dispositif d'entraînement plan ou horizontal commun (17, 37, 38) propre à entraîner les outils (20, 21) perpendiculairement à la direction de l'axe du disque de frein (27).

3. Dispositif selon la revendication 2, caractérisé en ce que le dispositif d'entraînement plan (17, 37, 38) est, pour l'usinage du disque de frein (27), déplaçable à l'aide d'un moteur électrique radialement vers l'extérieur par rapport à ce disque.

4. Dispositif selon l'une quelconque des revendications 1 à 3, caractérisé en ce que le dispositif d'entraînement en rotation comprend deux ensembles d'accouplement et centrage (24) orientés en sens inverses l'un de l'autre ainsi que les raccords appropriés, ensembles qui, de préférence, sont entraînés dans le même sens et sont montés sur les deux extrémités d'un arbre d'entraînement (9).

5. Dispositif selon la revendication 4, caractérisé en ce que le support d'outillage (44) est mobile entre deux positions de travail correspondant respectivement aux deux ensembles d'accouplement et centrage (24).

6. Dispositif selon l'une quelconque des revendications 1 à 5, caractérisé en ce que l'ensemble d'accouplement et centrage (24) est constitué par un moyeu comportant des possibilités de raccordement par vis adaptées à des moyeux de roues (26) différents.

7. Dispositif selon l'une quelconque des revendications 4 à 6, caractérisé en ce qu'une embase allongée (7) comporte un support de palier (8) pour un arbre d'entraînement (9) disposé sur celle-ci dans sa région médiane, support comportant de deux côtés des raccords pour des ensembles d'accouplement et centrage (24) et en ce qu'un guide (45) pour les support d'outillage (44) est disposé selon la direction longitudinale de l'embase (7), guide s'étendant d'un côté du support de palier (8).

8. Dispositif selon la revendication 7, caractérisé en ce que le support d'outillage (44) comporte une glissière longitudinale guidée de façon réglable sur le guide (45), une glissière transversale guidée de façon coulissante perpendiculairement à la précédente et portée par celle-ci et des supports d'outil (18, 19) réglables indépendamment à nouveau selon la direction perpendiculaire à celle de la glissière transversale et montés sur celle-ci.

Fig. 1

Fig. 2

Fig. 3